# EUROPEAN PATENT SPECIFICATION

(11) **EP 1 579 989 B1**
(45) Date of publication and mention of the grant of the patent: **30.04.2008**
(21) Application number: 05006246.2
(22) Date of filing: 22.03.2005
(51) Int. Cl.: B41F 19/00, B41G 7/00, B42D 15/00, B42C 1/00

(54) **Apparatus for providing printed sheets with holes**
Vorrichtung zum Anbringen von Löchern in bedruckten Bogen
Dispositif pour faires des trous dans des feuilles imprimées

(30) Priority: 23.03.2004 JP 2004084091
(43) Date of publication of application: 28.09.2005
(73) Proprietor: Komori Corporation, Sumida-ku Tokyo (JP)
(72) Inventor: Kumagai, Norihiro, Noda-shi Chiba (JP)
(74) Representative: UEXKÜLL & STOLBERG

(56) References cited:
- WO-A-03/085193
- US-A- 4 939 888

## Description

### Technical Field

This invention relates to a drilling apparatus of a printing press, which drills holes by a CO₂ laser in a sheet in the process of transport from a printing unit to a delivery unit.

### Background Art

Publications, such as Japanese Officially Published Patent Gazette No. 2000-501036 and Japanese Officially Published Patent Gazette No. 2001-503687, have hitherto disclosed counterfeit deterrence technologies by which laser marks are put on, or small holes are drilled in, securities such as checks and stock certificates, or bank notes to form patterns or characters.

Japanese Officially Published Patent Gazette No. 2000-501036 discloses a technology by which a bank note, for example, is irradiated with several laser beams from a laser light source at predetermined pulses to form a laser mark on the bank note. Japanese Officially Published Patent Gazette No. 2001-503687 discloses a technology for forming a predetermined drilled hole pattern in a document by controlling not only the intensity and focal length of laser light generated by computer-controlled laser light generation means, but also the direction of irradiation with laser light.

These laser marks or drilled hole patterns, if viewed in a reflected state, are not visible to an observer without the assistance of optical supplementary means. However, they can be seen with the naked eye, namely, without the help of technical equipment, if bank notes or documents bearing them are held exposed to light.

By the way, printed patterns, etc. with different motifs, in addition to laser marks or drilled hole patterns, are applied to securities such as checks and stock certificates, or bank notes.

However, laser marks or drilled hole patterns have been formed by dedicated machines (apparatuses) other than printing presses which apply printed patterns, etc. Thus, securitiesorbanknotes, towhich printed patterns, etc. have been applied by printing presses, have to be moved to dedicated machines (apparatuses) for laser marks or drilled hole patterns whenever the laser marks or drilled hole patterns are required. This has posed the problems that manufacturing man-hours are many, a burden on the operator is heavy, and an installation space for such machines is increased, thereby causing cost increases and productivity decreases.

The above-mentioned problems are resolved if laser marks or drilled hole patterns can be formed on the printing press. However, the following problems still remain unsolved: Instable motions of paper transported at a high speed cause concern about the stability of drilling accuracy for holes. Moreover, laser light which has drilled holes in a part of the paper is reflected to drill holes in another part of the paper.

Document US-A-4 939 888 (D1) discloses a web printing apparatus, the web being split into a plurality of ribbons and then cut into a stack of sheets. A laser applies holes into the printed sheets.The subject matter of claim 1 differs from the one according to D1 in that it comprises a vacuum table opposite to the CO2 Laser and in that the transport means comprise means for holding a front end portion of said sheet.

Document JP-A-2003-164988 (D2) discloses a device comprising transport means for transporting a sheet to a vacuum table and a laser for drilling holes into the vacuum table. The subject matter of claim 1 differs from the one according to D2 in that the laser is a CO2 Laser and in that the transport means comprise means for holding a front end portion of said sheet.

### Summary of the Invention

Therefore, it is an object of the present invention to provide a drilling apparatus of a printing press, which can form a laser mark or a drilled hole patter on a printing press with high accuracy.

To attain the above object, there is provided, a drilling apparatus of a printing press, comprising: transport means for transporting a sheet, which has been printed in a printing unit, from the printing unit to a sheet delivery unit while holding a front end portion of the sheet; a vacuum table for sucking the sheet being transported by the transport means; and a CO₂ laser, opposing the vacuum table, for directing a laser light at the sheet sucked by the vacuum table to drill holes in the sheet.

The vacuum table may be an acrylic plate having a plurality of air suction holes.

A sheet guide member is provided on a downstream side of the vacuum table with respect to a sheet transport direction, and the sheet guide member has suction holes communicating with the air suction holes of the vacuum table.

The sheet guide member has an inclined surface inclined in a direction in which the sheet sucked by the vacuum table is peeled off, the inclined surface being inclined from an upstream side in the sheet transport direction toward a downstream side in the sheet transport direction.

The sheet guide member is formed in a strip shape, and may be disposed with a predetermined spacing in a direction perpendicular to the sheet transport direction in such a manner as to evade the running path of gripper devices of the transport means.

Air blowers for blowing the sheet against a guide surface portion of the vacuum table are provided on the opposite side of the transport means from the vacuum table.

According to the present invention with the above-described features, a laser mark or a drilled hole pattern can be formed on a printing press. Thus, manufacturing man-hours and the burden on the operator can be reduced, and the installation space for the machine can be decreased, so that cost reduction and productivity increases can be achieved. Furthermore, the sheet being sucked by the vacuum table is drilled by laser light from the CO₂ laser. Hence, holes can be formed with high accuracy.

### Brief Description of the Drawings

The present invention will become more fully understood from the detailed description given hereinbelow and the accompanying drawings which are given by way of illustration only, and thus are not limitative of the present invention, and wherein:

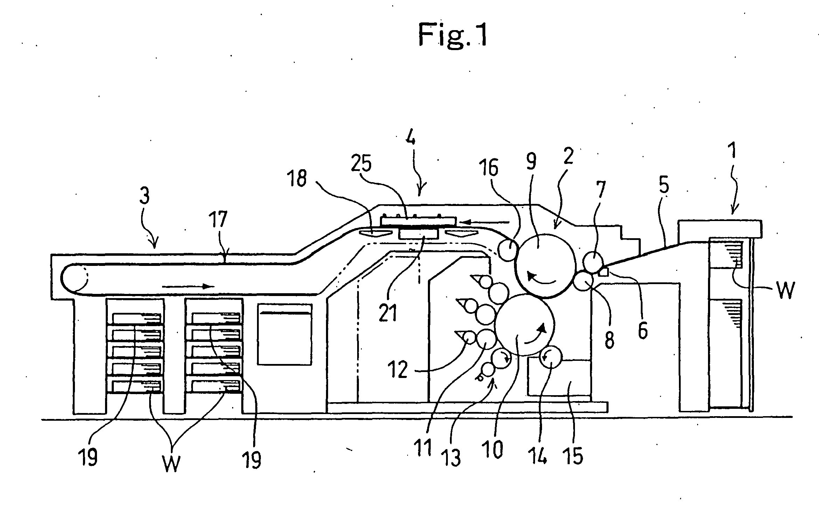

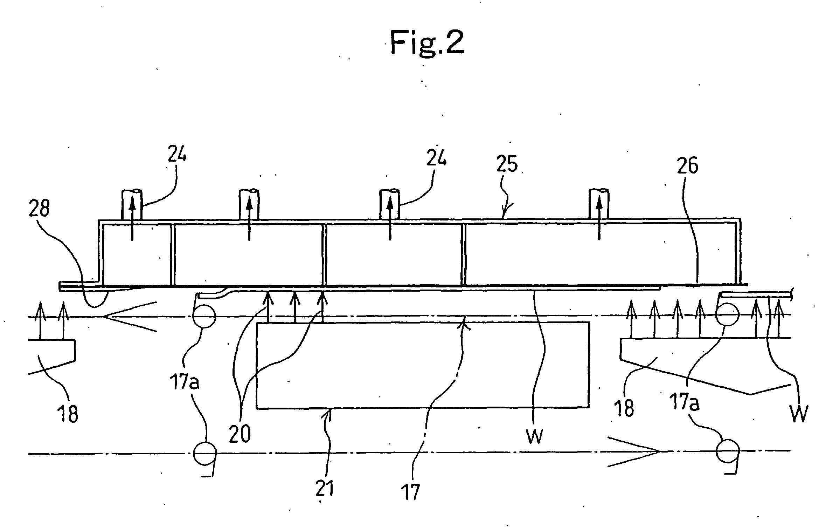

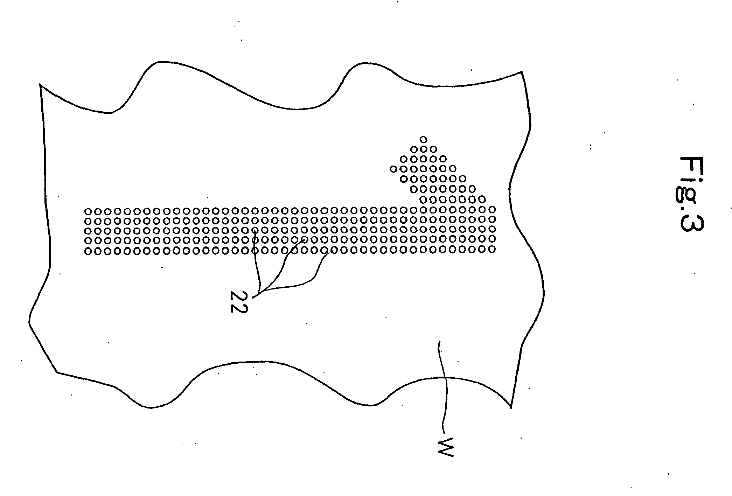

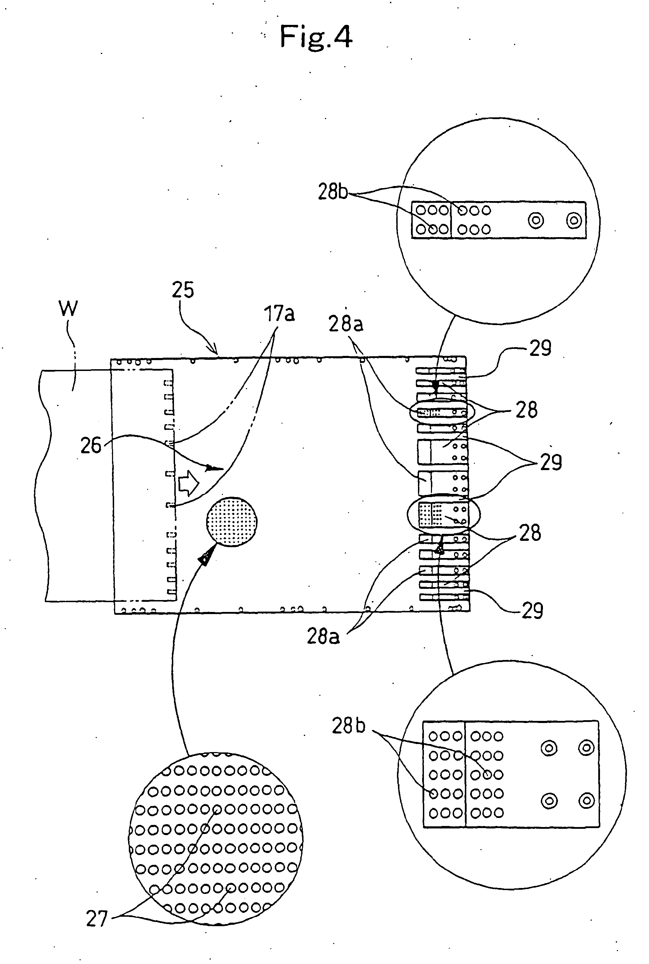

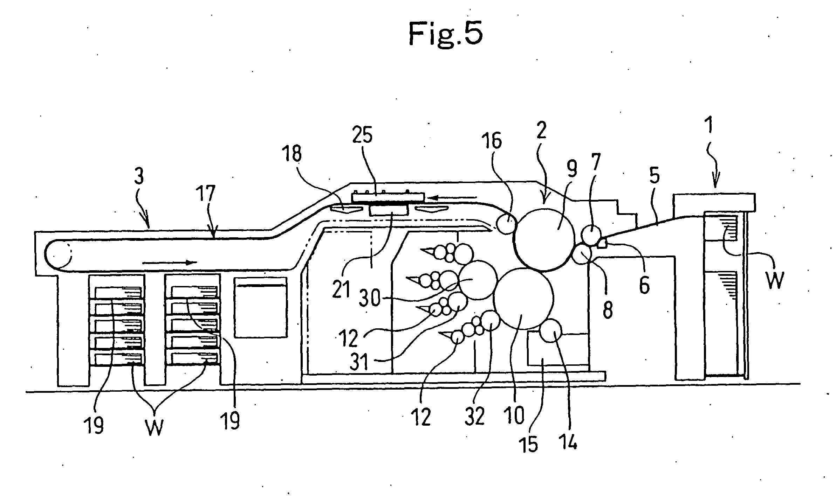

FIG. 1 is a schematic configurational drawing of a sheet-fed printing press showing Embodiment 1 of the present invention; FIG. 2 is an enlarged view of a drilling apparatus portion; FIG. 3 is an explanation drawing of a drilling example; FIG. 4 is an explanation drawing of a vacuum table; and FIG. 5 is a schematic configurational drawing of a sheet-fed printing press showing Embodiment 2 of the present invention.

### Detailed Description

A drilling apparatus of a printing press according to the present invention will now be described in detail by embodiments with reference to the accompanying drawings, which in no way limit the invention.

### Embodiment 1:

FIG. 1 is a schematic configurational drawing of a sheet-fed printing press showing Embodiment 1 of the present invention. FIG. 2 is an enlarged view of a drilling apparatus portion. FIG. 3 is an explanation drawing of a drilling example. FIG. 4 is an explanation drawing of a vacuum table.

As shown in FIG. 1, a sheet-fed (intaglio) printing press has a feeder 1, a printing unit 2, and a delivery unit (sheet delivery unit) 3. A drilling apparatus (laser marking system) 4 is provided between the printing unit 2 and the delivery unit 3.

In the feeder 1, stacked sheets W are transferred, one by one, to transfer cylinders 7 and 8 via a feeder board 5 and a swing arm shaft pregripper 6. The sheet W is to be transferred from the transfer cylinder 8 to an impression cylinder 9, which is a triple-size cylinder, of the printing unit 2.

In the printing unit 2, an intaglio cylinder 10, which is a triple-size cylinder, is in contact with a side of the impression cylinder 9 downstream of the transfer cylinder 8 in the direction of rotation. Three pattern rollers 11 are in contact with a side of the intaglio cylinder 10 downstream of the impression cylinder 9 in the direction of rotation while being located with predetermined spacing in the circumferential direction of the intaglio cylinder 10. Ink fountain devices 12 are in contact with these pattern rollers 11.

A prewiping device 13 is installed opposite a side of the intaglio cylinder 10 downstream of the pattern rollers 11 in the direction of rotation. A wiping roller 14 is in contact with a side of the intaglio cylinder 10 downstream of the prewiping device 13 in the direction of rotation. The wiping roller 14 has a lower-half portion immersed in a wiping tank 15 filled with a wiping solution.

A delivery cylinder 16 is in contact with a side of the impression cylinder 9 downstream of the intaglio cylinder 10 in the direction of rotation. A transport chain (transport means) 17, to which a plurality of gripper devices 17a (see FIG. 2) for receiving the sheet W from the impression cylinder 9 are attached at predetermined spacing, is passed over the delivery cylinder 16. The transport chain 17 runs, while being guided by a chain guide (not shown), to transport the sheet W received from the impression cylinder 9 onto a pile board 19 of the delivery unit 3 after having the sheet W dried by an air blower 18 or the like.

The drilling apparatus 4, as shown in FIG. 2, is equipped with a CO₂ laser (carbon dioxide gas laser) 21, which is disposed below the transport chain 17 for directing a plurality of beams of laser light 20 at the sheet W being transported by the transport chain 17 to drill holes in the sheet W, and a vacuum table 25 which is disposed above the transport chain 17 opposite the CO₂ laser 21 for sucking the sheet W being transported by the transport chain 17.

The CO₂ laser (apparatus) 21, as shown in FIG. 3, drills a plurality of holes 22, which are tiny enough to be minimally discernible with the naked eye, in a printed part of the sheet W printed with a bank note or the like, thereby forming a drilled hole pattern such as a design, a character, or a figure.

The vacuum table 25 is formed in a thin-box shape, and is provided with a guide surface portion 26 consisting of an acrylic plate on its side facing the transport chain 17. Taperpieces (sheet guide members) 28 are annexed to a downstream side of the guide surface portion 26 in the direction of sheet transport (sheet transport direction). In the illustrated example, the interior of the vacuum table 25 is partitioned into four chambers, which are each in communication with a vacuum source (not shown) via a vacuum hose 24.

As shown in FIG. 4, many air suction holes 27 are formed in the guide surface portion 26 of the vacuum table 25. Moreover, each taper piece 28 is provided with an inclined surface 28a inclined in a direction in which the sheet W sucked by the vacuum table 25 is gradually peeled off from an upstream side in the sheet transport direction toward a downstream side in the sheet transport direction.

The taper piece 28 is formed in a strip shape, and a plurality of the taper pieces 28 are disposed with predetermined spacing in a sheet width direction in such a manner as to evade the running path of the gripper devices 17a (strictly, grippers) so as not to interfere with the gripper devices 17a. Each of the taper pieces 28 is bolted to the vacuum table 25. That is, the taper pieces 28 are configured such that a groove 29 is formed between the adjacent taper pieces 28. Furthermore, suction holes 28b communicating with the air suction holes 27 are formed in a guide surface portion including the inclined surface 28a of the taper piece 28, but the suction holes 28b may be omitted.

Because of the foregoing features, when the sheet W is fed from the feeder 1 onto the feeder board 5, the sheet W is transferred from the swing arm shaft pregripper 6 to the transfer cylinder 7, and then to the impression cylinder 9 via the transfer cylinder 8.

When ink is supplied from the ink fountain device 12 to the intaglio cylinder 10 via the pattern roller 11, a surplus of this ink is removed by the prewiping device 13 and the wiping roller 14, whereafter the remaining ink is transferred to the sheet W held by the impression cylinder 9. During this process, inks from the three pattern rollers 11 are directly transferred to the intaglio cylinder 10. Thus, so-called three-color intaglio direct printing is performed, and a print (3-color) with a thick ink film can be made.

The so printed sheet W is transferred from the impression cylinder 9 to the gripper devices 17a of the transport chain 17 at the delivery cylinder 16. Then, the sheet W is transported to the drilling apparatus 4 by the transport chain 17 running along the chain guide. After a predetermined drilled hole pattern is formed in the sheet W by the drilling apparatus 4, the sheet W is delivered in a stacked state on the pile board 19.

The ordinary sheet W is a light, easily deformable material, and its shape tends to be influenced by the flow of air. Thus, while the sheet W gripped by the gripper devices 17a is being transported at a high speed, the sheet W cannot maintain a flat posture, but is deformed, with the result that a continuous instable motion of the sheet W occurs.

In the present embodiment, on the other hand, air is blown from the air blower 18 onto the unstably behaving sheet W, whereby the sheet W is blown against the guide surface portion 26 of the vacuum table 25 without sagging. Then, air is sucked by the many air suction holes 27 formed in the guide surface portion 26, whereby the sheet W is attracted to the guide surface portion 26. The attracted sheet W is transported by the gripper devices 17a while being attracted to the guide surface portion 26.

With the sheet W being thus blown against and attracted to the guide surface portion, namely, its unstable behavior being suppressed, the sheet W is irradiated with laser light 20 by the CO₂ laser (apparatus) 21 to form a predetermined drilled hole pattern. The sheet W after formation of the pattern is peeled off laboriously by the inclined surface 28a of the taper piece 28. That is, the instability of the trailing edge of the sheet due to rapid release from the suction force at the trailing edge of the sheet is prevented, and thus the sheet is smoothly transported.

In the present embodiment, as described above, a predetermined drilled hole pattern can be formed on the printing press. Thus, manufacturing man-hours and the burden on the operator can be reduced, and the installation space for the machine can be decreased, so that cost reduction and productivity increases can be achieved.

Furthermore, the sheet W being sucked by the vacuum table 25 is irradiated with laser light 20, and drilled thereby. Thus, a hole drilling error by the laser light 20 is reduced, and only hole drilling can be performed with high accuracy by the laser light 20 from the CO₂ laser 21, with the surroundings of the holes in the sheet W not being burned. Besides, the guide surface portion 26 is formed from the acrylic plate which is a material absorbing light highly. Thus, injury due to reflection of the laser light 20, and damage to the vacuum table 25 can be prevented.

### Embodiment 2:

FIG. 5 is a schematic configurational drawing of a sheet-fed printing press showing Embodiment 2 of the present invention.

This is an example having the following features: A collecting cylinder 30 is in contact with the intaglio cylinder 10 in Embodiment 1. Inks from ink fountain devices 12 are transferred to the collecting cylinder 30 via three pattern rollers 31. A pattern roller 32 is in contact with the intaglio cylinder 10 located downstream of the collecting cylinder 30 in the direction of rotation. Ink from an ink fountain device 12 is transferred to the pattern roller 32 via suitable transfer rollers. The other features are the same as those in FIG. 1. Thus, the same members as in FIG. 1 will be assigned the same numerals as in FIG. 1, and duplicate explanations will be omitted.

According to this embodiment, inks from the three pattern rollers 31 are transferred to the intaglio cylinder 10 via the collecting cylinder 30, and ink from the one pattern roller 32 is directly transferred to the intaglio cylinder 10. This brings the advantage that so-called three-color intaglio indirect printing, and one-color intaglio direct printing are performed, whereby a print (3-color) with a thin ink film and a print (1-color)with a thick ink film can be made. Other actions and effects are the same as those in Embodiment 1.

While the present invention has been described by the above embodiments, it is to be understood that the invention is not limited thereby, but may be varied or modified in many other ways. For example, the laser light 20 is directed upward in each of the embodiments. However, the CO₂ laser 21 and the vacuum table 25 may be placed reversely with respect to the delivery chain 17, or their placements may be rotated, whereby the laser light 20 may be directed downward or sideways. Moreover, it goes without saying that an unprinted part of the sheet W may be drilled by the CO₂ laser 21. Such variations or modifications are not to be regarded as a departure from the spirit and scope of the invention, and all such variations and modifications as would be obvious to one skilled in the art are intended to be included within the scope of the appended claims.

## Claims

1. A drilling apparatus of a printing press, comprising:
transport means (17) for transporting a sheet (W), which has been printed in a printing unit (2), from said printing unit to a sheet delivery unit (3) means for holding a front end portion of said sheet;
a vacuum table (25) for sucking said sheet being transported by said transport means; and
a CO₂ laser (21), opposing said vacuum table, for directing a laser light at said sheet sucked by said vacuum table to drill holes in said sheet.

2. The drilling apparatus of a printing press according to claim 1, **characterized in that** said vacuum table (25) is an acrylic plate having a plurality of air suction holes (27).

3. The drilling apparatus of a printing press according to claim 2, **characterized in that**
a sheet guide member (28) is provided on a downstream side of said vacuum table (25) with respect to a sheet transport direction, and
said sheet guide member has suction holes (28b) communicating with the air suction holes (27) of said vacuum table (25).

4. The drilling apparatus of a printing press according to claim 1, **characterized in that**
a sheet guide member (28) is provided on a downstream side of said vacuum table (25) in a sheet transport direction, and
said sheet guide member has an inclined surface (28a) inclined in a direction in which said sheet (W) sucked by said vacuum table (25) is peeled off, said inclined surface being inclined from an upstream side in said sheet transport direction toward a downstream side in said sheet transport direction.

5. The drilling apparatus of a printing press according to claim 4, **characterized in that**
said sheet guide member (28) is formed in a strip shape, and a plurality of said sheet guide members are disposed with a predetermined spacing in a direction perpendicular to the sheet transport direction in such a manner as to evade a running path of gripper devices (17a) of said transport means (17).

6. The drilling apparatus of a printing press according to claim 1, **characterized in that**
air blowers (18) for blowing said sheet (W) against a guide surface portion (26) of said vacuum table (25) are provided on an opposite side of said transport means (17) from said vacuum table.

## Patentansprüche

1. Bohrvorrichtung für eine Druckmaschine, mit:
Transporteinrichtungen (17) zum Transportieren eines in einer Druckeinheit (2) bedruckten Bogens (W) von der Druckeinheit zu einer Bogenzuführeinheit (3), während ein vorderer Endbereich des Bogens gehalten wird;
einem Unterdrucktisch (25) zum Ansaugen des durch die Transporteinrichtungen transportierten Bogens; und
einem dem Unterdrucktisch gegenüberliegend angeordneten CO₂-Laser (21), um Laserlicht auf den durch den Unterdrucktisch angesaugten Bogen zu richten, um Löcher in den Bogen zu bohren.

2. Bohrvorrichtung für eine Druckmaschine gemäß Anspruch 1, **dadurch gekennzeichnet, dass** der Unterdrucktisch (25) eine Acrylplatte mit einer Mehrzahl an Luftansauglöchern (27) ist.

3. Bohrvorrichtung für eine Druckmaschine gemäß Anspruch 2, **dadurch gekennzeichnet, dass**
an einer bezüglich der Bogentransportrichtung stromabwärts gelegenen Seite des Unterdrucktisches (25) ein Bogenführungsbauteil (28) vorgesehen ist; und
das Bogenführungsbauteil Ansauglöcher (28b) aufweist, die mit den Luftansauglöchern (27) des Unterdrucktisches (25) in Verbindung stehen.

4. Bohrvorrichtung für eine Druckmaschine gemäß Anspruch 1, **dadurch gekennzeichnet, dass**
an einer bezüglich der Bogentransportrichtung stromabwärts gelegenen Seite des Unterdrucktisches (25) ein Bogenführungsbauteil (28) vorgesehen ist; und
das Bogenführungsbauteil eine geneigte Fläche (28a) hat, die in einer Richtung geneigt ist, in der der durch den Unterdrucktisch (28) angesaugte Bogen (W) abgezogen wird, wobei die geneigte Fläche von einer stromaufwärts gelegenen Seite in der Bogentransportrichtung in Richtung auf eine stromabwärts gelegene Seite in der Bogentransportrichtung geneigt ist.

5. Bohrvorrichtung für eine Druckmaschine gemäß Anspruch 4, **dadurch gekennzeichnet, dass**
das Bogenführungsbauteil (28) in einer Streifenform gebildet ist, und eine Mehrzahl der Bogenführungsbauteile mit einem vorbestimmten Abstand in einer Richtung senkrecht zur Bogentransportrichtung in einer solchen Weise angeordnet ist, um einen Bewegungspfad der Greifervorrichtungen (17a) der Transporteinrichtungen (17) zu umgehen.

6. Bohrvorrichtung für eine Druckmaschine gemäß Anspruch 1, **dadurch gekennzeichnet, dass**
Luftgebläse (18) zum Blasen des Bogens (W) gegen einen Führungsflächenbereich (26) des Unterdrucktisches (28) an einer bezüglich des Unterdrucktisches gegenüberliegenden Seite der Transporteinrichtungen (17) vorgesehen sind.

## Revendications

1. Appareil de perçage d'une presse d'imprimerie, comprenant :
un moyen de transport (17) permettant de transporter une feuille (W) qui a été imprimée dans une unité d'impression (2), de ladite unité d'impression jusqu'à une unité de sortie de feuilles (3) tout en maintenant une partie terminale frontale de ladite feuille ;
une table aspirante (25) permettant d'aspirer ladite feuille à transporter par ledit moyen de transport ; et
un laser CO₂ (21) opposé à ladite table aspirante, permettant de diriger une lumière laser sur ladite feuille aspirée par ladite table aspirante pour percer des trous dans ladite feuille.

2. Appareil de perçage d'une presse d'imprimerie selon la revendication 1, **caractérisé en ce que** ladite table aspirante (25) est une plaque acrylique comportant une pluralité de trous d'aspiration d'air (27).

3. Appareil de perçage d'une presse d'imprimerie selon la revendication 2, **caractérisé en ce qu'**un organe de guidage de feuille (28) est prévu sur une face en aval de ladite table aspirante (25) par rapport à une direction de transport de feuille, et
ledit organe de guidage de feuille comprend des trous d'aspiration (28b) communiquant avec les trous d'aspiration d'air (27) de ladite table aspirante (25).

4. Appareil de perçage d'une presse d'imprimerie selon la revendication 1, **caractérisé en ce qu'**un organe de guidage de feuille (28) est prévu sur une face en aval de ladite table aspirante (25) dans une direction de transport de feuille, et
ledit organe de guidage de feuille comprend une surface inclinée (28a) dans une direction dans laquelle ladite feuille (W) aspirée par ladite table aspirante (25) est décollée, ladite surface inclinée étant inclinée à partir d'un côté amont dans ladite direction de transport de la feuille vers un côté aval dans ladite direction de transport de la feuille.

5. Appareil de perçage d'une presse d'imprimerie selon la revendication 4, **caractérisé en ce que** ledit organe de guidage de feuille (28) a la forme d'une bande et une pluralité desdits organes de guidage de feuille est disposée selon un écartement prédéterminé dans une direction perpendiculaire à la direction de transport de la feuille, de manière à éviter une trajectoire opérationnelle des dispositifs de préhension (17a) dudit moyen de transport (17).

6. Appareil de perçage d'une presse d'imprimerie selon la revendication 1, **caractérisé en ce que** des soufflantes (18) permettant de souffler ladite feuille (W) sur une partie de la surface de guidage (26) de ladite table aspirante (25) sont prévus sur une face opposée dudit moyen de transport (17) par rapport à ladite table aspirante.
